# DEMANDE DE BREVET EUROPEEN

(11) **EP 0 989 720 A1**
(43) Date de publication de la demande: **29.03.2000**
(21) Numéro de dépôt: 99402142.6
(22) Date de dépôt: 27.08.1999
(51) Int. Cl.: H04M 3/42, H04M 3/38, H04M 3/36

(54) **Dispositif téléphonique destiné au milieu carcéral**

(30) Priorité: 27.08.1998 FR 9810772
(71) Demandeur: FRANCE TELECOM, 75015 Paris (FR)
(72) Inventeur: Memeteau, Dominique, 79420 Beaulieu sous Parthenay (FR); Chaigne, Jean-Christophe, 79200 Parthenay (FR)
(74) Mandataire: Armengaud Ainé, Alain

(57) **Abrégé**

Dispositif téléphonique destiné au milieu carcéral, comprenant au moins une unité de supervision (1) connectée, d'une part à une pluralité de combinés téléphoniques (2) destinés aux détenus, et d'autre part à une pluralité d'autres combinés téléphoniques (3) destinés aux surveillants, l'unité de supervision (1) étant, d'une part paramétrable suivant plusieurs modes possibles selon le règlement interne propre à l'établissement pénitentiaire ainsi équipé, de manière à permettre un contrôle des accès au réseau téléphonique et d'autre part offre à l'Administration ou à l'exploitant la possibilité d'accéder à tout ou partie des fonctions de contrôle, au niveau de périphériques optionnels (4), également connectés à l'unité de supervision, caractérisé en ce que les combinés téléphoniques destinés aux détenus sont du type téléphone public à carte (6) à puce.

## Description

La présente invention est relative à un dispositif d'équipement téléphonique particulièrement destiné au milieu carcéral.

A l'heure actuelle, l'échange de communications téléphoniques entre les détenus incarcérés dans un établissement pénitentiaire (maison d'arrêt, centrale etc...) et le milieu extérieur, est généralement soumis à un règlement intérieur propre à chaque établissement. Ces règlements établis à partir de directives provenant de l'Administration judiciaire, définissent un champ d'applications à partir duquel les directions des établissements pénitentiaires élaborent leur propre règlement en prenant en considération la nature de la population carcérale.

Ce problème est particulièrement sensible car ces règlements doivent concilier des positions au demeurant opposées. En effet, la population carcérale a droit au respect d'une certaine liberté individuelle tout en conciliant les contraintes de l'univers carcéral et particulièrement la surveillance par l'Administration pénitentiaire des appels téléphoniques échangés par les détenus avec le milieu extérieur.

En outre, des statistiques établies par le concessionnaire du réseau téléphonique démontrent de manière incontestable que le volume d'impulsions téléphoniques facturé est considérable et qu'il convient donc de prendre en compte le facteur économique dans le type de technologie installée au sein d'un environnement carcéral.

Dans le cadre de cette règlementation dont le contenu dépend de chaque établissement, les installations téléphoniques en service actuellement peuvent comporter un certain nombre de combinés téléphoniques reliés par des lignes classiques aux centraux extérieurs, dont l'utilisation (prise de ligne, numérotation, écoute, surveillance, enregistrement, coupure, raccroché de la communication) ne peut être effectuée que par le surveillant, celui-ci demeurant présent et aux côtés du détenu lorsque celui-ci est en communication.

D'autres solutions beaucoup plus radicales consistent purement et simplement à interdire au détenu l'échange de communications téléphoniques avec l'extérieur.

Entre ces deux extrêmes, une solution intermédiaire parfois rencontrée dans certains établissements consiste à permettre de manière occasionnelle, et sous le pouvoir discrétionnaire de l'Administration pénitentiaire, l'accès d'un détenu à un poste dédié.

La présente invention vise donc à pallier ces inconvénients en proposant un dispositif qui concilie les impératifs des règlementations carcérales avec les souhaits des détenus qui désirent néanmoins échanger quelques communications téléphoniques avec le milieu extérieur.

A cet effet, le dispositif téléphonique destiné au milieu carcéral se caractérise en ce qu'il comporte au moins une unité de supervision connectée, d'une part à une pluralité de combinés téléphoniques destinés aux détenus, et d'autre part à une pluralité d'autres combinés téléphoniques destinés aux surveillants, l'unité de supervision étant, d'une part paramétrable suivant plusieurs modes possibles selon le règlement interne propre à l'établissement pénitentiaire ainsi équipé, de manière à permettre un contrôle des accès au réseau téléphonique, et d'autre part offre à l'Administration ou à l'exploitant la possibilité d'accéder à tout ou partie des fonctions de contrôle, au niveau de périphériques optionnels, également connectés à l'unité de supervision.

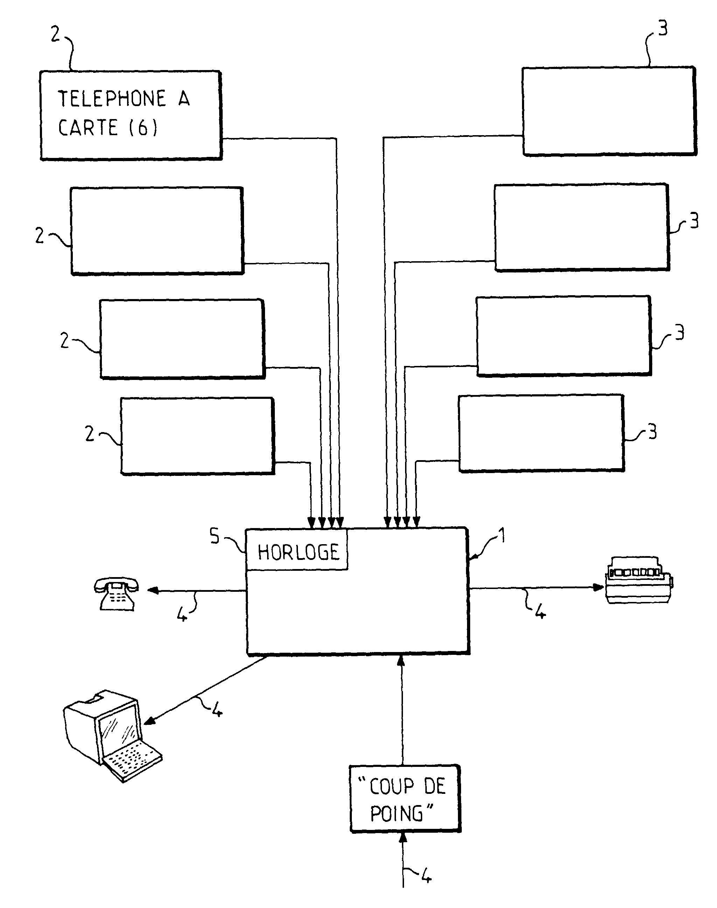

D'autres caractéristiques et avantages de la présente invention ressortiront de la description faite ci-après, en référence au dessin annexé qui en illustre un exemple de réalisation dépourvu de tout caractère limitatif.

La figure unique est une vue synoptique du dispositif faisant l'objet de l'invention.

Selon un mode préféré du dispositif objet de l'invention, celui-ci comporte tout d'abord au moins une unité de supervision 1 connectée, d'une part à une pluralité de combinés téléphoniques 2 destinés aux détenus, et d'autre part à une pluralité d'autres combinés téléphoniques 3 constituant des postes de surveillance), ceux-ci étant dévolus à l'Administration pénitentiaire et notamment aux surveillants.

L'unité de supervision 1 peut être également reliée à des périphériques optionnels 4 situés dans des locaux techniques dont l'accès est règlementé et généralement destiné aux surveillants. Ces périphériques optionnels 4 peuvent être notamment des postes de surveillance, des magnétophones, au moins un système de coupure d'urgence (système coup de poing à réarmement à clé), imprimante, "Minitel", ordinateur etc...

L'unité de supervision 1 est constituée notamment par un autocommutateur à technologie analogique ou numérique, communément appelé PABX, qui est paramétrable. On peut ainsi agir sur le contrôle des accès au réseau téléphonique placé en aval, avec plusieurs variantes possibles selon le règlement interne propre à l'établissement pénitentiaire ainsi équipé.

On peut ainsi définir par exemple cinq modes pour le contrôle d'accès :
- le premier mode constitue la numérotation libre. Le détenu peut joindre tout correspondant en effectuant lui-même la numérotation ; cependant, les numéros libres actuellement à deux chiffres (gendarmerie, pompiers, SAMU, renseignements etc...), les numéros gratuits ainsi que certains numéros sont inaccessibles ;
- le deuxième mode constitue la numérotation libre filtrée. Le détenu peut joindre tout correspondant non discriminé en effectuant lui-même la numérotation. Les critères de discrimination sont élaborés en fonction du règlement intérieur de l'établissement pénitentiaire et ils interdisent à une communication d'aboutir. De ce fait, les numéros interdits du premier mode le sont également.

A titre d'exemple, on peut ainsi interdire un appel dans une région déterminée (03********), ou à l'international (00**********), ou un numéro de correspondant donné (**********) ;
- le troisième mode constitue la numérotation codée. Le détenu ne peut joindre que les correspondants autorisés par un code. L'Administration pénitentiaire affecte au détenu, lors de sa mise sous écrou, un ou plusieurs codes abrégés. Chaque code correspond à un numéro de correspondant souhaité par le détenu et accepté par l'Administration pénitentiaire. Celle-ci, ou l'exploitant privé, programme au sein de l'autocommutateur les codes et les numéros selon les arrivées et les départs des détenus.

L'action de composer son (ses) numéro(s) abrégé(s) permet au détenu d'obtenir les seuls correspondants prédéfinis ;
- le quatrième mode constitue la numérotation avec code confidentiel. La numérotation, qui est soumise aux critères de discrimination de l'Administration pénitentiaire ou de l'exploitant, est effectuée par le détenu après composition de son code confidentiel qui lui a été affecté lors de son incarcération. Ce quatrième mode permet de constituer un historique des communications échangées en listant l'énumération des numéros appelés ;
- le cinquième mode constitue la numérotation par le gardien. Le détenu ne peut joindre que le correspondant filtré par le gardien. Au décroché du combiné téléphonique accessible au détenu, celui-ci est obligatoirement et seulement mis en relation avec le poste de surveillance. Sans raccrocher, le surveillant (après contrôle de la numérotation désirée, et du nombre d'appels qui lui est attribué) compose le numéro du correspondant qu'il transfèrera simplement vers le détenu en raccrochant son combiné. Ce mode de fonctionnement est similaire à celui d'un standard manuel.

Selon une autre caractéristique de l'invention, l'unité de supervision 1 qui gère et autorise l'ensemble des communications échangées entre l'établissement pénitentiaire et le milieu extérieur comporte également une horloge 5 interne paramétrable qui offre la possibilité de la mise en place d'un calendrier pour limiter l'accès au réseau téléphonique pendant certaines plages horaires, le basculement étant automatique.

Ainsi, dans un premier exemple, les détenus n'auront accès à leurs correspondants, que sur des plages définies : accès autorisé de 8 heures à 20 heures et interdit de 20 heures à 8 heures, ou encore accès autorisé de 8 heures à 12 heures et de 14 heures à 20 heures et interdit dans les autres plages horaires. Dans un second exemple, ces plages horaires peuvent être modulables en fonction des jours de la semaine, des périodes de l'année et des jours fériés.

L'unité de supervision 1, outre notamment ces cinq modes de numérotation possible, offre à l'Administration ou à l'exploitant la possibilité d'accéder à tout ou partie des fonctions de contrôle. Ainsi, ce système permet de voir le numéro complet du correspondant appelé par le détenu, d'écouter discrètement sa conversation et éventuellement d'intervenir sur celle-ci, de libérer la communication, de libeller un journal des communications établies, d'enregistrer les conversations et enfin de restreindre l'accès au réseau téléphonique.

Ces fonctions de contrôle et de supervision sont déportées ou délocalisées de l'unité de supervision 1 vers des postes de surveillance ou des périphériques optionnels 4. Ainsi, la vision du numéro entier du correspondant demandé par le détenu est affiché sur le poste de surveillance qui est affecté au combiné téléphonique du détenu ; de même, l'écoute discrète de la communication, l'intervention sur la conversation et la libération de la communication sont réalisées à partir de ce même poste de surveillance.

Optionnellement, le périphérique d'impression relié à l'unité de supervision peut suivre et libeller un listage de la communication en mentionnant les informations pertinentes (date et heure du début de communication, numéro appelé, identité du détenu, date et heure de fin de communication, durée de la communication, nombre d'impulsions, nature du mode utilisé etc...

Par ailleurs, le périphérique d'enregistrement constitué notamment par un magnétophone numérique ou analogique, un CDROM enregistrable, permet de garder une trace de la conversation échangée, et enfin, le dispositif d'urgence permet de restreindre graduellement ou totalement l'accès au réseau téléphonique.

Selon une autre caractéristique de l'invention, les combinés téléphoniques 2 destinés aux détenus sont du type téléphone public à carte.

Selon encore une autre caractéristique de l'invention, les cartes 6 utilisées par les détenus comportent une puce dont la mémoire dispose d'un compteur d'impulsions et de manière optionnelle peut également être munie des différents codes et/ou numéros téléphoniques que l'Administration pénitentiaire autorise aux détenteurs de la carte.

Le mode opératoire en mode numérotation libre et libre filtré est le suivant :

Le détenu introduit sa carte à puce dans la fente du téléphone public à carte, décroche le combiné du téléphone, ce qui provoque l'allumage d'un voyant sur l'unité de surveillance signalant la prise de ligne. Le détenu compose alors le numéro de son correspondant (la discrimination est effectuée automatiquement).

Durant la conversation du détenu avec son correspondant, le surveillant peut, par appui sur un certain nombre de touches intégrées sur son unité de surveillance, écouter discrètement la conversation, l'enregistrer, intervenir sur cette communication, ou au besoin couper celle-ci.

La communication peut se terminer, soit par le raccroché normal du détenu, soit par coupure forcée du gardien.

Au raccroché de la communication, l'unité d'impression peut éditer un journal de la communication passée où peut apparaître : l'horodatage, le numéro du correspondant, la durée de communication.

Dans le mode numérotation codée, le mode opératoire est identique à celui décrit précédemment, la seule différence consiste dans la phase de numérotation du numéro du correspondant appelé par le détenu. Celui-ci compose un code au lieu d'un numéro traditionnel, notamment à dix chiffres. Au préalable, l'Administration aura pris soin de programmer les codes attribués aux détenus au sein de l'unité de supervision.

Dans le mode numérotation avec codes confidentiels (ceux-ci auront été préalablement attribués et programmés au sein de l'unité de supervision), le mode opératoire est le suivant :

Le détenu introduit sa carte et décroche le combiné de téléphone. Il compose son numéro de code confidentiel et obtient ainsi la tonalité. Cette opération provoque au niveau du poste de surveillance l'allumage d'un témoin qui signale la prise de ligne.

Le détenu compose le numéro de son correspondant (la discrimination est effectuée automatiquement).

Au niveau du poste de surveillance, le gardien en appuyant sur une touche dédiée, voit le numéro composé et peut au cours de la conversation, par action sur d'autres touches dédiées, écouter, enregistrer, intervenir et couper la conversation.

La communication téléphonique se termine, soit de manière normale par le raccroché du détenu, soit de manière forcée par l'intervention du surveillant. Egalement, une unité d'impression permet d'établir un journal de la communication.

Dans le dernier mode (numérotation par le gardien), le mode opératoire diffère des modes précédents, seulement lors de la phase de prise de ligne par le détenu.

Le détenu introduit sa carte, puis décroche le combiné téléphonique, il obtient alors le gardien et lui demande de composer le numéro de son correspondant. Si le numéro de correspondant est autorisé, le surveillant bascule alors la communication sur le poste du détenu.

La présente invention telle que décrite précédemment offre de multiples avantages : elle réalise ainsi une réponse à un besoin des détenus, tout en garantissant à l'Administration pénitentiaire le respect des règlements en vigueur ; en outre, elle permet à l'exploitant d'offrir un service qui peut générer un volume de communications important.

Il demeure bien entendu que la présente invention n'est pas limitée aux exemples de réalisation décrits et représentés ci-dessus, mais qu'elle en englobe toutes les variantes.

## Revendications

1. Dispositif téléphonique destiné au milieu carcéral, comprenant au moins une unité de supervision (1) connectée, d'une part à une pluralité de combinés téléphoniques (2) destinés aux détenus, et d'autre part à une pluralité d'autres combinés téléphoniques (3) destinés aux surveillants, l'unité de supervision (1) étant, d'une part paramétrable suivant plusieurs modes possibles selon le règlement interne propre à l'établissement pénitentiaire ainsi équipé, de manière à permettre un contrôle des accès au réseau téléphonique et d'autre part offre à l'Administration ou à l'exploitant la possibilité d'accéder à tout ou partie des fonctions de contrôle, au niveau de périphériques optionnels (4), également connectés à l'unité de supervision, caractérisé en ce que les combinés téléphoniques destinés aux détenus sont du type téléphone public à carte (6) à puce.

2. Dispositif selon la revendication 1, caractérisé en ce qu'il comporte les fonctions suivantes : voir le numéro complet du correspondant appelé par le détenu, d'écouter discrètement la conversation et éventuellement d'intervenir sur celle-ci, de libérer la communication, de libeller un journal des communications établies, d'enregistrer les conversations et enfin de restreindre l'accès au réseau téléphonique.

3. Dispositif selon la revendication 1, caractérisé en ce qu'il est paramétré selon un premier mode qui constitue la numérotation libre, le détenu pouvant joindre tout correspondant en effectuant lui-même la numérotation ; cependant, les numéros libres actuellement à deux chiffres, les numéros gratuits ainsi que certains numéros sont inaccessibles.

4. Dispositif selon la revendication 1, caractérisé en ce qu'il est paramétré selon un deuxième mode qui constitue la numérotation libre filtrée, le détenu pouvant joindre tout correspondant non discriminé en effectuant lui-même la numérotation.

5. Dispositif selon la revendication 1, caractérisé en ce qu'il est paramétré selon un troisième mode qui constitue la numérotation codée, le détenu ne pouvant joindre que les correspondants autorisés par un code.

6. Dispositif selon la revendication 1, caractérisé en ce qu'il est paramétré selon un quatrième mode qui constitue la numérotation avec code confidentiel, la numérotation, qui est soumise aux critères de discrimination de l'Administration pénitentiaire ou de l'exploitant, est effectuée par le détenu après composition de son code confidentiel qui lui a été affecté lors de son incarcération.

7. Dispositif selon la revendication 1, caractérisé en ce qu'il est paramétré selon un cinquième mode qui constitue la numérotation par le gardien, le détenu ne pouvant joindre que le correspondant filtré par le gardien.

8. Dispositif selon l'une quelconque des revendications précédentes, caractérisé en ce que l'unité de supervision (1) comporte une horloge (5) interne paramétrable qui offre la possibilité de la mise en place d'un calendrier pour limiter l'accès au réseau téléphonique pendant certaines plages horaires, le basculement étant automatique.

9. Dispositif selon la revendication 1, caractérisé en ce que les cartes (6) utilisées par les détenus comportent une puce dont la mémoire dispose des différents codes et/ou numéros téléphoniques que l'Administration pénitentiaire autorise aux détenteurs de la carte.
